# EUROPEAN PATENT APPLICATION

(11) **EP 1 998 378 A1**
(43) Date of publication of application: **03.12.2008**
(21) Application number: 08008833.9
(22) Date of filing: 13.05.2008
(51) Int. Cl.: H01L 31/048

(54) **Connector box assembling in a photovoltaic solar module**

(30) Priority: 29.05.2007 ES 200701140
(71) Applicant: IFV-ENSOL, S.L., 28816 Camarma de Esteruelas Madrid (ES)
(72) Inventor: Bartolome Tabladillo, Daniel, 28816 Camara de Esteruelas Madrid (ES); Fornies Garcia, Eduardo, 28816 Camara de Esteruelas Madrid (ES); Llaneza Caruana, Benjamin, 28816 Camara de Esteruelas Madrid (ES); Tojeiro Lorente, Marta, 28816 Camara de Esteruelas Madrid (ES)
(74) Representative: Isern-Jara, Nuria

(57) **Abstract**

Connector box (1), particularly for assembling in a photovoltaic solar module, whose connector box (1) is made up of a base structure (2) that includes a plurality of cooling ribs (5) for the dissipation of heat, a clamp for the holding of the cables to the connector box (3), a protector lid (4) for the connector box (4) and connector cables (6) going to the outside to be fitted to an external connection, and where all the previously mentioned parts are made from plastic materials that have high resistance to adverse weather conditions, chemical products and, said materials having additives to give resistance to ultra-violet radiation and fire.

## Description

### AIM OF THE INVENTION

The invention refers to a connector box made from a plastic material assembled onto the rear part of a photovoltaic solar module, which is used to ensure the attachment, to provide a good and reliable electrical connection, likewise to protect the materials, electronic components and electrical connections of said photovoltaic solar module against external aggression.

More particularly, the connector box of the invention is characterised in that the design encourages the evacuation of possible heat build up on the inside and makes the intervention easier for technicians in the event of a failure of any of the components on the inside.

The connector box object of the invention has been particularly thought out and made in order to obtain appreciable advantages in the durability and reliability of the photovoltaic solar module when compared to the other already existing devices with similar purposes.

### BACKGROUND OF THE INVENTION

At the present time, differing types of connector boxes are known for photovoltaic solar modules fitted with connection systems for the electrical components on the inside likewise a system for its closure that provides the necessary watertight seal, in which it has been possible to observe just like in the said electrical connection system connection methods are used by means of mechanical contact or the partial soldering of some of the electrical components to active parts that make up the solar module.

Normally, the electronic components and connections located on the inside of these connector boxes are positioned just behind some of the photovoltaic cells inserted between the differing layers of the photovoltaic solar module. This brings about that the electrical characteristics of said cells are reduced as a result of the heat released by the electronic components, normally protection diodes, during the periods of activation.

In addition, various fixing and sealing systems for the connector box to the rear of the solar module are known with the use of double sided adhesive tapes, silicone, polyurethanes or other types of hot or cold dispensed mono or bi-component polymers, however, these fixing systems have a series of disadvantages that are: The porosity of the material, the loss of the mechanical and dielectric properties over time due to the reaction to ultra-violet radiation or chemical agents, likewise the lack of material flexibility to thermal stress to which the photovoltaic solar module is subjected.

The previously stated problems can bring about the loss of the watertight seal of the connector box, even a total or partial lifting off of the box and, therefore, the possibility of the entry of water or humidity into the interior which can give rise to the corrosion of the conductor parts or the communication of the electrical parts with opposite polarities; thus all of this being able to bring about the electrical breakdown or short-circuit of the photovoltaic solar module.

### DESCRIPTION OF THE INVENTION

This present invention has been developed for the purpose of providing a connector box aimed at solving the previously stated disadvantages, in addition giving other advantages that will be evident from the description that is attached below.

Therefore, one aim of the invention is to provide a connector box aimed at being assembled in a photovoltaic solar module, that is made up of four basic parts: A base structure, the protector lid, the connector cables that allow the conduction of the electrical energy generated by the photovoltaic solar module to the outside and a part that works as a clamp for the holding of these connector cables by means of pressure and grip on its lid, thus eliminating the possible tension on the connector terminal assembled onto the end of each cable that remains on the inside of the connector box.

The connector box of this design encourages the dissipation of possible heat build up on the inside by means of the provision of a plurality of cooling ribs on the protector lid and on the base. The material used for the manufacture of the parts of this connector box is a polymer material, highly resistant to adverse weather conditions, a great diversity of chemical products and that in addition is fitted with a series of additives to guarantee its resistance to ultra-violet radiation and fire.

Advantageously, the protector lid of the connector box is fitted with a silicone thoric seal that guarantees the water tightness on the inside with a closure system by means of pressure with screws from the outside of the seal.

Connected to the connector box are the connector cables, fitted with quick connector terminals with a safe locking system that has an IP67 protection level for the conductor parts. Actually there are two of these cables, one with a female termination and positive polarity and the other with a male termination and negative polarity. The cable used is double insulated with solar grade covering resistant to ultra-violet radiation and different chemical substances, likewise resistant to abrasion and deterioration. A tin plated copper terminal is soldered to the free end of the cables that has a large size and section or another similar conductor material, with a circular through opening for the passage of the screw through it, more details are provided in the following paragraph.

Some electrical connections are made on the inside of the box that allow the energy generated by the solar module to be conducted to the outside by means of the two cables of differing polarity as stated in the previous paragraph. These connections are made from the electronic circuit on the inside of the mentioned large section laminated terminals, and are assembled and fixed on the inside of the box helped by a stainless steel nut, bolt and washer. Each one of these terminals are crimped and soldered to one of the two solar module cables.

In accordance with another aspect of the invention, some flat strips of tin plated copper are used for the making of the connections on the inside of the connector box which are soldered at one end to the electronic circuit that is laminated on the inside of the solar module, during the inter-connection soldering process and, at the other, a tin plated copper with a large section terminal is mechanically and electrically connected and positioned in the connector box being fixed by means of a bolt, nut and washer, to a constant pair, likewise by soldering. This soldering is carried out away from the mechanical fixing area for the purpose of not rendering the mechanical contact useless. In this way a good electrical and mechanical connection of the electrical connections is guaranteed between the flat tin plated copper strips that connect to the inner circuit of the photovoltaic solar module to the large section terminals located on the inside of the connector box, which in turn form a part of the connector cables that transfer the energy generated by the module to the outside. This connection system guarantees the durability of the photovoltaic solar module.

By preference, the base structure is provided with a hole or inner window which have the electronic components and electrical connections inside that go from the outside to the inside of the photovoltaic solar module, this hole being filled with a transparent and thermo-conductor dielectric gel.

As a fixer or sealer for the connector box to the rear of the solar module, likewise for the connector cables of the module that emerge through some holes made in the side of the box, a quick vulcanised mono-component silicone is used at room temperature, that has good adhesive properties to metal and polymers, that has a flexible nature, is non-corrosive, resistant to adverse weather conditions, a wise temperature range, ultra-violet light and chemical agents. This mono-component silicone is applied to the perimeter of the base of the base structure and in the inside of some chambers located on the part of the case box that has the function of a clamp or connector cable fixing on the stretch that penetrates into the box itself, for the purpose of making a seal to stop the possible entry of water, humidity or other external agents through the holes made through the box for the entry of these cables.

For the encapsulation and protection of the connections on the inside of the connector box against corrosion a bi-component encapsulating neutral silicone is used, that is non-corrosive, that vulcanises at room temperature to a flexible rubber state, that prevents damage to the electrical and electronic components occurring from impacts, vibrations or fatigue; it has good chemical stability and resistance to ultra-violet radiation, it has good dielectric properties, is resistant to fire and, in addition it is a thermo-conductive material that helps to dissipate the heat generated on the inside of the connector box.

For the purpose of preventing the undoing of the protector lid on the front of the connector box, when its opening is necessary, a standard external clamp is used that is also resistant to a wide temperature range and to ultra-violet radiation.

### A BRIEF DESCRIPTION OF THE DRAWINGS

In order to complement the description of all of that which is being made in this present memorandum and for the purpose of giving a greater understanding of the nature of the invention, a set of descriptive drawings is attached to this present descriptive memorandum, as an integral part of same, drawings that are by way of illustration and without being by way of limitation and which represents the most significant details of the invention, in which:

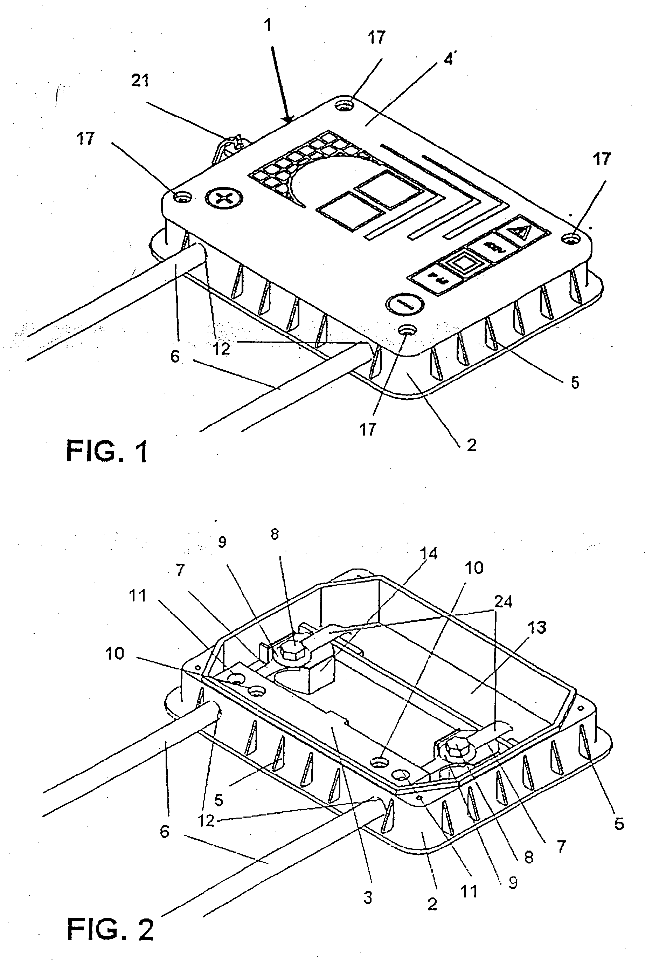

Figure 1 shows a perspective view of the front part of the connector box in accordance with the present invention;
Figure 2 shows a perspective view of the front part of the connector box without the protective lid;
Figure 3 shows a plan view of the front part of the rear part of the base of the connector box;

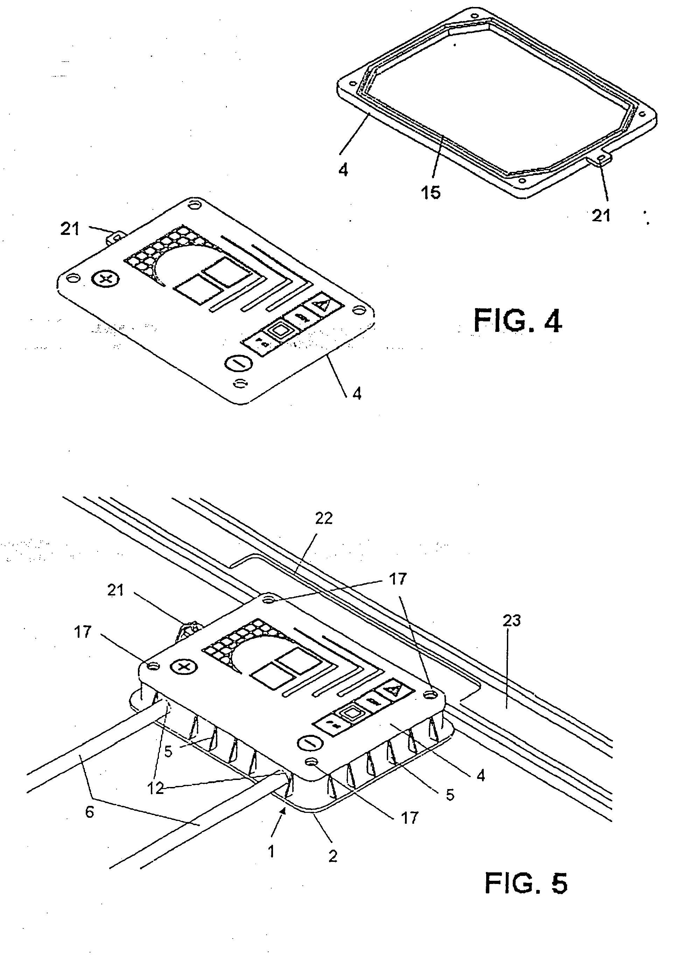

Figure 4 shows front and rear perspective views of the protector lid of the connector box; and
Figure 5 shows the section of a perspective view of the rear part of a photovoltaic solar module where the connector box can be found.

### A DESCRIPTION OF A PREFERRED EMBODIMENT

In view of the referred figures, a preferred embodiment of the referenced connector box can be seen in a general way by means of reference (1) this is basically made up of four parts that are described in greater detail below:

A base structure (2), support clamp for the cables to the connector box (3), a connector box protector lid (4) and connector cables (6) to the outside attachable to each other, as shown in the figures, all of them made from plastic materials that have high resistance to adverse weather conditions, a great variety of chemical products and, in addition provided with a series of additives that guarantee their resistance to ultra-violet radiation and fire.

The first part is the flat base structure (2) that is appreciably rectangular, on the external side walls of which there are cooling ribs (5) that help with the dissipation of the hot build up on the inside of the connector box (1). The connector cables (6), with an appropriate length and section that correspond to the design of the photovoltaic solar module, pass through two circular openings (12) made in the widest face of the connector box. These connector cables are fitted with a quick contact connector terminal with a safe locking system and IP67 protection degree for the conductor parts at the end that goes to the outside of the connector box. At the other end of the connector cables (6), this means, the end that is located on the inside of the connector box (1), a large section, tin plated copper terminal (7) that has a bolt hole on its blade is joined by means of a crimping and soldering process. This terminal (7) is held to a support structure (14) made on the inside of the connector box (1), by a nut (18) that is fed through a hexagonal cavity in the rear of the base of the box, a washer (9) that is positioned between the terminal (7) assembled onto said support structure and the bolt (8) that is tightened in a secure manner onto the nut.

Once the connector cables (6) are assembled and fixed to the terminals (7) located on the inside of the connector box (1), a second part is assembled that provides support or as a clamp (3) for same (6) to the box itself (1). This clamp (3) is fixed to the connector box (1) by means of two bolts (10). In the clamp section (3) that is assembled onto the connector cables (6) there are some cavities (11) that surround same, and which have and opening from the outside with a nozzle shape. These cavities (11) are sealed with a neutral mono-component silicone that has very good dielectric and mechanical characteristics, in so far as flexibility, resistance to a wide temperature range, ultra-violet radiation, fire, etc. In this way the entry of external agents into the inside of the box (1) is prevented through the openings (12) made onto the front face wall.

The inner space (13) of the connector box (1) in which the electrical components and connections are found are filled with a transparent and thermo-conductor dielectric gel that is made from a fast curing neutral bi-component silicone that also has good stability properties to chemical agents, ultra-violet radiation and fire and that in that of its flexibility properties prevents damage to the electrical components and connections on the inside of the box as a consequence of impact, vibration or fatigue. This dielectric gel is used as an encapsulation to protect said connections and components from oxidation or aggression from possible external agents.

The connector box (1) is closed on the upper part by a third part, which is the protector lid (4), and four bolts (17). On the lower part of the protector lid (4), through a channel, a silicone thoric gasket (15) is fitted that provides suitable water tightness to the connector box assembly (1) and the protector lid (4), when said protector lid (4) is closed onto the connector box (1) by means of the tightening of the bolts (17) that remain on the outside of the closure provided by the thoric gasket (15). Likewise the protector lid (4) is fixed to the connector box (1) by means of an external clamp (21) to prevent both parts from becoming undone.

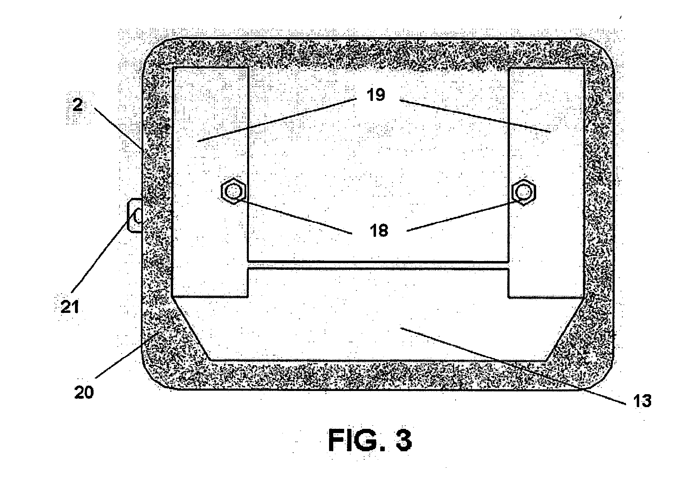

At the rear of the base structure (2) of the connector box (1) some double sided adhesives (19) are fixed on, as shown with greater clarity in figure 3,that allow the connector box (1) to be fixed to the rear of the photovoltaic solar module in an immediate manner so that it can be handled while the mono-component silicone seal strip hardens, said seal string being applied in a uniform manner to the rough periphery (20) of the rear face of the base structure (2) so as to fix the box (1) to the photovoltaic solar module. In this way, the risk of detachment or movement of the connector box (1) is prevented and the need for intermediate storage times during the photovoltaic solar module manufacturing process.

The connector box (1) that is recommended is located on the rear and upper part of the photovoltaic solar module, next to the housing (22) made on the upper aluminium frame (23) that protects the solar module and, away from the core of the photovoltaic cells.

It is not considered necessary to make this description more extensive as any expert in the matter can understand the scope of the invention and the advantages that are provided by same.

The details, shapes, sizes and other accessorial elements, likewise the materials used in the manufacture of the connector box of the invention can be appropriately substituted by others that are technically equivalent and do not stray away from the essentiality of the invention or the scope defined by the claims that are included below.

## Claims

1. Connector box (1), especially for the assembling in a photovoltaic solar module, **characterised in that** it is made up from:
a base structure (2) that includes a plurality of cooling ribs (5) for the dissipation of heat;
a clamp for the support of the cables to the connector box (3),
a protector lid (4) of the connector box (4); and
connector cables (6) positioned towards the outside for connecting to an external connection,
and **in that** the above stated pieces are manufactured from plastic materials with high resistance to adverse weather conditions, chemical products and, said materials being made with additives that give resistance to ultra-violet radiation and fire.

2. Connector box (1) in accordance with Claim 1, is **characterised in that** the rear part of the base structure (2) is made with a section that has a rough surface arranged along the peripheral region (20) where a silicone gasket strip is applied, and some rectangular surfaces where some double sided adhesives (19) are applied to fix the connector box (1) to the rear part of the photovoltaic solar module.

3. Connector box (1) in accordance with claim 1 is **characterised in that** the widest side of the base structure (2) has some circular opening (12) for the passage of the connector cables (6).

4. Connector box (1) in accordance with claim 3 is **characterised in that** the cables (6) are held to the connector box, on the inside, by means of a fixing clamp (3) and bolts (10).

5. Connector box (1) in accordance with claims 3 and 4 is **characterised in that** the claim (3) has two cavities (11) that surround the cables (6) and which are sealed with a mono-component neutral silicone.

6. Connector box (1) in accordance with claim 1 is **characterised in that** the connector cables (6) are fixed on the inside of the connector box (1) by means of a conductor terminal (7) that is crimped and soldered at the free end of the cable (6).

7. Connector box (1) in accordance with claim 6 is **characterised in that** said terminal (7) has a circular opening on its blade for the passage of a bolt and is assembled onto a support (14) arranged on the inside of the base structure (2), said terminal (7) being assembled onto the support (14) by means of the nut (18), washer (9) and bolt (8) assembly.

8. Connector box (1) in accordance with claim 1 is **characterised in that** the base structure (2) is provided with a hole or inner window (13) which has the electronic components and electrical connections inside that go from the outside to the inside of the photovoltaic solar module, this hole (13) being filled with a transparent and thermo-conductor dielectric gel.

9. Connector box (1) in accordance with claim 1 is **characterised in that** the lower part of the protector lid (4) and in the inside of a channel have a thoric silicone gasket (15) fitted, providing a means of making it watertight between the base structure (2) and the protector lid (4) when said protector lid (4) is in the closed position.

10. Connector box (1) in accordance with claim 9 is **characterised in that** the protector lid (4) is joined to the base structure (2) by means of an external clamp (21) that laterally overlaps towards the outside.
